Europäisches Patentamt

European Patent Office

Office européen des brevets

(11) Veröffentlichungsnummer: **0 451 586 A2**

## (12) EUROPÄISCHE PATENTANMELDUNG

(21) Anmeldenummer: 91104608.4

(51) Int. Cl.5: **C09K 7/02**

(22) Anmeldetag: 23.03.91

(30) Priorität: 07.04.90 DE 4011348

(43) Veröffentlichungstag der Anmeldung:
16.10.91 Patentblatt 91/42

(84) Benannte Vertragsstaaten:
**AT DE FR GB NL**

(71) Anmelder: **BAYER AG**

**W-5090 Leverkusen 1 Bayerwerk(DE)**

(72) Erfinder: **Westerkamp, Aloys, Dr.**
**Auf der Höhe 47**
**W-5060 Bergisch Gladbach 1(DE)**
Erfinder: **Wegner, Christian, Dr.**
**Miltzstrasse 13**
**W-5000 Köln 80(DE)**
Erfinder: **Müller, Hanns-Peter, Dr.**
**Weizenfeld 36**
**W-5060 Bergisch Gladbach 2(DE)**

(54) **Bohrloch-Behandlungsflüssigkeiten mit Tonquellungsinhibierenden Eigenschaften (II).**

(57) Gemische aus Hydroxyaldehyden, Hydroxyketonen und gegebenenfalls noch weiteren Bestandteilen, z.B. sogenannte Formose, verleihen Bohrloch-Behandlungsflüssigkeiten tonquellungsinhibierende Eigenschaften.

EP 0 451 586 A2

Die vorliegende Erfindung betrifft Bohrloch-Behandlungsflüssigkeiten, die das Aufquellen von tonhaltigen Mineralien, die mit diesen Flüssigkeiten Kontakt haben, vermindern bzw. vermeiden. Damit ist ein kontrolliertes Durchteufen und Hochspülen tonhaltigen Materials bei der Erschließung von Erdöl- und Erdgaslagerstätten möglich, wobei insbesondere das Abbröckeln und Dispergieren tonhaltiger Mineralien zurückgedrängt bzw. verhindert werden.

Die vorliegende Erfindung betrifft weiterhin ein Verfahren zur Herstellung von solchen wäßrigen Bohrloch-Behandlungsflüssigkeiten und ein Verfahren zur Minderung der Quellneigung von Tonen in Bohrlöchern.

In Bohrlöchern, die zur Förderung von Erdöl und/oder Erdgas niedergebracht werden, werden verschiedene Behandlungsflüssigkeiten verwendet. Hierzu gehören zum Beispiel die Bohrspülungen, die während des Bohrvorgangs durch das rotierende Bohrgestänge nach unten gepumpt werden, an den Düsen des Bohrmeißels austreten und in dem Ringraum zwischen Bohrlochwand und Bohrgestänge wieder nach oben gefördert werden. Die Bohrspülungen haben unter anderem die Funktion, den Bohrmeißel zu schmieren und zu kühlen, das erbohrte Gestein an die Erdoberfläche zu transportieren, die Bohrlochwand zu stützen und abzudichten und schließlich bei Stillstand der Bohrung das auf dem Weg an die Oberfläche befindliche Material suspendiert zu halten.

Im einfachsten Fall enthält eine solche Bohrspülung neben Süß- oder Salzwasser nur feindisperse Tone, die ganz oder teilweise aus der durchbohrten Formation selbst stammen oder gezielt, z.B. zur Ausbildung bestimmter rheologischer Eigenschaften, zugegeben werden. In der Regel enthält eine Bohrspülung zu Einstellung gewünschter Eigenschaften noch weitere Zuschlagstoffe, z.B. Beschwerungsmittel wie Baryt, Hämatit, Kreide und/oder Eisenoxid; Schutzkolloide wie Stärke, Carboxymethylcellulose, polyanionische Cellulosen und/oder synthetische Copolymere; Verdicker wie Carboxymethylcellulose, Hydroxyethylcellulose, Biopolysaccharide, Attapulgit und/oder Sepiolith; Dispergatoren wie Chromlignosulfonat, Lignit, Phosphonate und/oder Acrylate; Ätznatron; Bakterizide; Gleitmittel; Tenside und/oder Stabilisatoren. Eine ausführliche Darstellung über die Zusammensetzung und Funktion von Bohrspülungen findet sich in G.R. Grey, H.C.H. Harley und W.F. Rogers: Composition and Properties of Oilwell Drilling Fluids; Gulf Publishing (1980).

Weitere Bohrloch-Behandlungsflüssigkeiten, die z.B. im Anschluß an die Niederbringung einer Bohrung Verwendung finden können, sind z.B. sogenannte Packer-Fluids, Perforationsflüssigkeiten, Komplettierungsmedien, Aufwältigungsmedien, Säuerungsmedien und/oder Frac-Medien. Sie sind in der Regel weniger komplex zusammengesetzt als Bohrspülungen, können aber wie diese Zusätze enthalten, z.B. Verdicker, Beschwerstoffe, pH-Regulatoren, Bakterizide und/oder Tenside. Eine detaillierte Darstellung über den Aufbau und die Funktion solcher Bohrloch-Behandlungsflüssigkeiten findet sich in T.O. Allen und A.P. Roberts: Production Operations, Vol. 1 und 2, Oil & Gas Consultants Int. Inc., (1978).

Während alle genannten Bohrloch-Behandlungsflüssigkeiten auf Wasserbasis sich gut eignen, harte Gesteinsformationen und sandige Formationen zu durchbohren und zu behandeln, treten in tonhaltigen Formationen gravierende Probleme auf. Besonders Tonformationen, die quellbare Mineralien, z.B. Smectit, Illit und/oder Bentonit enthalten, neigen beim Kontakt mit Wasser zum Aufquellen. Dies führt zu einem Hereinbrechen von Teilen der Bohrlochwand in die Bohrung. Die Folge sind erhöhte Drehmomente und Zuglasten und eventuell ein Festwerden, d.h. Stillstand, des Bohrgestänges. Es resultieren geringerer Bohrfortschritt und Zementierungsprobleme, also beträchtliche Betriebserschwernisse.

Schwerwiegende Folgen kann auch die weitere Desintegration und die Dispergierung bereits in die Spülphase übergetretener Tonpartikel haben. Derart dispergierter Ton läßt sich kaum aus der Spülflüssigkeit abtrennen und bewirkt darin die Ausbildung unkontrollierbar hoher Viskositäten und Gelstärken. Im Trägerbereich schließlich, d.h. in der Erdöl und/oder Erdgas führenden Formation, ist eine gravierende Schädigung zu befürchten, wenn Preßwasser aus der Spülung in die Öl-oder Gas-führende Formation eindringt und dort vorhandene Tonmaterialien aufquellen läßt.

Es sind schon einige Versuche bekannt geworden, durch Einführung von andersartigen oder modifizierten Bohrspülungen die aufgezeigten Schwächen gewöhlicher wasserbasischer Spülungen zu überwinden. In der US-PS 2 356 776 und in Journal of Petroleum Technology Oct. 1970, S. 1309 - 1316 wird der Einsatz von Bohrspülungen mit Öl als Basisflüssigkeit beschrieben. In der US-PS 3 831 678 ist die Verwendung ölbasischer Packer-Fluids beschrieben. L.L. Leroy beschreibt in "Petroleum Engineer", April 1977, S. 62 - 76, Komplettierungsflüssigkeiten mit Öl als kontinuierlicher, gegen quellbare Tone inerter Phase.

Bohrloch-Behandlungsflüssigkeiten mit Öl als äußerer Phase haben aber auch gravierende Nachteile im Vergleich zu wasserbasischen Medien. Die Kosten einer Ölspülung sind deutlich höher als die einer Wasserspülung. Die Herstellung ölbasischer Flüssigkeiten erfordert aufwendige Apparaturen für die Emulgierung der Wasserphase im Öl. Ölspülungen sind brennbar und erfordern daher besondere Sicherheitsvorkehrungen. Die Spülungseigenschaften müssen ständig kontrolliert werden, insbesondere um unbeabsichtigen Phasentrennungen vorzubeugen. Das Bohrklein muß speziell aufgearbeitet werden, um es vom anhaftenden Öl und Emulgatoren zu befreien, bevor es deponiert werden kann, Verbrauchte Ölspülungen müssen kostenintensiv aufgearbeitet oder als Sonderabfall entsorgt werden.

Angesichts dieser Nachteile ölbasischer Bohrloch-Behandlungsflüssigkeiten wurde auch versucht, wasserbasische Spülungen so zu modifizieren, daß sie zum Durchteufen tonhaltiger Formationen geeignet sind. So beschreibt die US-PS 4 495 800 den Zusatz einer bestimmten Menge Alkalisalz, insbesondere Kaliumchlorid, zur Spülung. R.K. Clark et. al. beschrieben im Journal of Petroleum Technology Juni 1976, S. 719 - 727, die Verwendung einer Spülung, die neben Kaliumchlorid ein partiell hydrolysiertes Polyacrylamid enthält, ein System, das als Shell/ KCl-Polymer-Spülung bekannt geworden ist. Hauptnachteil dieser Spülung ist ihre Empfindlichkeit gegen Zufluß von Salzlaugen, insbesondere von Calcium enthaltenden Salzlaugen.

Die US-PS 2 802 783 betrifft die Zugabe von Kalk zur Spülung. Nachteilig ist hierbei, daß Calcium-Ionen mit Verdickern auf Basis synthetischer Polymere ebenso wie mit den üblichen Schutzkolloiden reagieren und deren Wirksamkeit stark beeinträchtigen.

Tensid-Kalk-Spülungen zur Lösung des Tonquellungsproblems beim Tiefbohren schlagen R,F. Burdyn und L.D. Wiener in "World Oil" Nov. 1957, S. 101 - 108 vor. Solche Spülungen sind jedoch schwierig in ihren Eigenschaften zu kontrollieren, sie neigen zum Schäumen und können im Trägerbereich Formationsschäden durch Ausbildung sogenannter Emulsionsblocks hervorrufen.

In jüngster Zeit wurde versucht, durch Zusatz hygroskopischer Hydroxylverbindungen den Spülungen toninhibierende Eigenschaften zu verleihen. Solche Systeme werden in der US-PS 4 830 765, der EP-OS 0 293 191 und in WO 89/01491 beschrieben. Um ausreichende Wirksamkeit zu erreichen, müssen diese Hydroxylverbindungen in relativ hohen Konzentrationen (z.B. über 25 Gew.-% 1,2-Propandiol gemäß WO 89/01491) zugegeben werden. Daraus resultiert einerseits ein hoher Preis für die Spülung und andererseits beeinflussen die großen Mengen Hydroxylverbindungen den Viskositätsaufbau von Polymeren, die als Viskositätsbildner den Spülungen zugesetzt werden.

Es gibt also noch keine kostengünstige und nicht mit Nachteilen behaftete Lösung der Probleme, die in Bohrlöchern auftreten, die sich in quellbare Tone enthaltenden Formationen befinden.

Es wurden nun tonquellungsinhibierende Bohrloch-Behandlungsflüssigkeiten gefunden, die dadurch gekennzeichnet sind, daß sie ein Gemisch aus Hydroxyaldehyden, Hydroxyketonen, gegebenenfalls niedermolekularen, mehrwertigen Alkoholen und gegebenenfalls weiteren Bestandteilen enthalten.

Das erfindungsgemäß einzusetzende Gemisch aus Hydroxyaldehyden, Hydroxyketonen und gegebenenfalls niedermolekularen, mehrwertigen Alkoholen wird im folgenden auch als Formose bezeichnet. Formose kann man auf bekannte und einfache Weise herstellen, beispielsweise indem man Formaldehyd in einem wäßrigen Reaktionsmedium in Gegenwart von Katalysatoren kondensiert. Das wäßrige Reaktionsmedium kann dabei beispielsweise Temperaturen von 50 bis 150° C und beispielsweise pH-Werte von 7,5 bis 12 aufweisen. Als Katalysatoren kommen beispielsweise Kalzium- oder Blei(II)-Verbindungen, als Co-Katalysatoren Zuckergemische, insbesondere bereits gebildete Formose in Frage. Besonders vorteilhafte Verfahren zur Herstellung von Formose, die für die vorliegende Erfindung geeignet ist, sind z.B. in DE-OS-2 721 186, DE-OS-2 738 512 und den US-Patenten 4 156 636, 4 205 138, 4 219 508, 4 301 310 und 4 379 862 beschrieben.

Die erfindungsgemäß einzusetzende Formose kann beispielsweise 40 bis 99 Gew.-% Hydroxyaldehyde, 1 bis 60 Gew.-% Hydroxyketone und 0 bis 40 Gew.-% niedermolekulare, mehrwertige Alkohole enthalten. Zusätzlich können in der Formose weitere Bestandteile enthalten sein, z.B. jeweils bis zu 20 Gew.-% Aminoalkohole und Glucosamine. Die Hydroxyaldehyde und Hydroxyketone können beispielsweise je 2 bis 8 C-Atome und pro Molekül 1 bis 7 OH-Gruppen und 1 bis 3 Aldehyd-bzw. Ketogruppen enthalten. Bei den niedermolekularen, mehrwertigen Alkoholen kann es sich beispielsweise um solche handeln, die 2 bis 8 C-Atome und pro Molekül 2 bis 7 OH-Gruppen enthalten.

Bevorzugt ist Formose, die 60 bis 99 Gew.-% Hydroxyaldehyde und 1 bis 40 Gew.-% Hydroxyketone enthält.

Tonhaltige Formationen, die mit wasserbasischen Bohrspülungen durchteuft werden, welche die erfindungsgemäß einzusetzenden Gemische enthalten, neigen weniger zum Aufquellen und Nachfall, als wenn diese Produkte nicht enthalten sind. Entsprechendes gilt auch für sonstige Bohrloch-Behandlungsflüssigkeiten, die erfindungsgemäß einzusetzende Produkte enthalten.

Bereits in die Spülflüssigkeit eingetretene Tonmineralien werden durch die Anwesenheit erfindungsgemäß einzusetzender Gemische daran gehindert, hohe Viskositäten und Gelstärken aufzubauen.

Die erfindungsgemäßen Bohrloch-Behandlungsflüssigkeiten können Gemische der beschriebenen Art beispielsweise in Mengen von 0,1 - 60 Gew.-% enthalten. Bevorzugt liegt der Gehalt bei 0,5 - 30 Gew.-%, besonders bevorzugt bei 1,0 - 20 Gew.-%.

Unter Bohrloch-Behandlungsflüssigkeiten im Sinne der vorliegenden Erfindung werden alle einleitend Aufgeführten verstanden, insbesondere Bohrspülungen, Komplettierungs-, Aufwältigungs-, Packer-, Säuerungs-, Frac-und sonstige Stimulierungsflüssigkeiten, die überwiegend aus Wasser bestehen und die Neigung besitzen, quellfähige Tonmineralien zum Aufquellen und zum Aufbau hoher Viskositäten und/oder Gelstärken zu bringen, wenn sie die erfindungsgemäß zuzusetzenden Gemische nicht enthalten.

Die Bohrloch-Behandlungsflüssigkeiten können neben den erfindungsgemäß einzusetzenden Gemischen weitere Zusatzstoffe enthalten, z.B. 0 - 10 Gew.-% Tone, wie Bentonit oder Attapulgit, 0 - 10 Gew.-% Bohrklein oder erbohrte Tone; 0 - 30 Gew.-% Beschwerungsmittel wie Baryt, Ilmenit oder Eisenoxid; 0 - 30 Gew.-% Sand und/oder Proppants wie gesinterten Bauxit; 0 - 40 Gew.-% Salze wie Natriumchlorid und/oder Calciumchlorid, 0 -10 Gew.-% natürliche und/oder synthetische Polymere wie Stärke, Carboxymethylcellulose, Hydroxyethylcellulose, Polyacrylamide und sonstige polyanionische Copolymere und/oder Polyvinylpyrrolidon und/oder Gleitmittel, Bakterizide, Korrosionsinhibitoren, Sulfite und/oder sonstige für Bohrloch-Behandlungsflüssigkeiten übliche Zusätze.

Die erfindungsgemäß zu verwendenden Gemische können als alleinige Inhibitoren oder in Kombination mit weiteren, die Quellbarkeit von Tonen beeinflussenden Additiven in erfindungsgemäßen Bohrloch-Behandlungsflüssigkeiten enthalten sein.

Weiterhin können erfindungsgemäße Bohrloch-Behandlungsflüssigkeiten zusätzlich Tenside, Aluminiumoxid-Hydroxide, Glykole und/oder Polyether enthalten.

Die vorliegende Erfindung betrifft weiterhin ein Verfahren zur Herstellung von tonquellungsinhibierenden wäßrigen Bohrloch-Behandlungsflüssigkeiten, das dadurch gekennzeichnet ist, daß man eine übliche wäßrige Bohrloch-Behandlungsflüssigkeit mit 0,1 - 60 Gew.-% eines Gemisches versetzt, das Hydroxyaldehyde, Hydroxyketone und gegebenenfalls niedermolekulare, mehrwertige Alkohole enthält.

Die vorliegende Erfindung betrifft weiterhin ein Verfahren zur Minderung der Quellneigung von Tonen in Bohrlöchern, das dadurch gekennzeichnet ist, daß man eine wäßrige Bohrloch-Behandlungsflüssigkeit verwendet, die ein Gemisch enthält, das Hydroxyaldehyde, Hydroxyketone und gegebenenfalls niedermolekulare, mehrwertige Alkohole enthält.

Bei den erfindungsgemäßen Verfahren zur Herstellung tonquellungsinhibierender wäßriger Bohrloch-Behandlungsflüssigkeiten und zur Minderung der Quellneigung von Tonen in Bohrlöchern können die erfindungsgemäß einzusetzenden Gemische in den weiter oben beschriebenen Mengen zum Einsatz gelangen. Ebenso können, wie weiter oben beschrieben, Zusätze der verschiedensten Art vorgenommen werden.

Beispiel 1 (Zum Vergleich)

400 ml Leitungswasser wurden im Mischbecher eines Hamilton Beach Mixers vorgelegt. Unter Rühren auf Stufe I (etwa 11.000 Upm) wurden 35 g bei 110° C getrockneter Wyoming-Bentonit eingestreut. Das Gemisch wurde 16 Stunden bei Raumtemperatur stehen gelassen. Danach wurde im Hamilton Beach Mixer 1 Minute lang aufgerührt und dann die rheologischen Daten der so erhaltenen Bohrspülungen mit einem Fann Viskosimeter (Baroid Variable Speed Electronic Rheometer) nach API Standard ermittelt ("API specification for Oil-Well Drilling Fluid Materials") API Spec 13 A, 5.Ed., American Petroleum Institute, Dallas, März 1981 und "API Recommended Practice: Standard Procedure for Testing Drilling Fluids", API RP 13 B, 11 .Ed., American Petroleum Institute, Dallas, Mai 1982). Die Ergebnisse sind in Tabelle 1, Spalte A, zusammengestellt. Daraus ist ersichtlich, daß der Bentonit im Wasser aufquillt und dem entstandenen Schlamm eine beträchtliche Viskosität und Gelstärke verleiht.

Im Anschluß an diese Messung wurden 10 ml einer gesättigten Salzlösung (enthaltend $CaCl_2$ x $2H_2O$ und NaCl im Gewichtsverhältnis 1:9) der Spülung hinzugefügt, 10 Minuten lang bei Stufe I aufgerührt und die Bestimmung der rheologischen Daten wiederholt. Die so erhaltenen Daten sind in Tabelle 2, Spalte A, zusammengestellt. Daraus ist ersichtlich, daß in Gegenwart von Salzwasser eine drastische Vergelung des gequollenen Tons auftritt. Dies wird besonders deutlich im Anstieg der Gelstärken und der Fließgrenze. Diese Erscheinung wird auch als Umbruch bezeichnet.

Beispiel 2

Es wurden weitere Spülungen analog Beispiel 1 hergestellt mit dem Unterschied, daß eine bestimmte Menge des Leitungswassers durch eine entsprechende Menge einer Formose ersetzt wurde, die gemäß der DE-OS 2 721 186 (=GB-PS 1 586 442), Beispiel 1, hergestellt worden war.

Die Menge an Formose wurde in verschiedenen Ansätzen variiert. Die verwendeten Mengen an Formose und die gemessenen rheologischen Daten sind in den Spalten B-F der Tabellen 1 (vor Salzwasser-Zusatz) und 2 (nach Salzwasser-Zusatz) zusammengestellt.

In Gegenwart von nur 1 Gew.-% Formose wird der Viskositätsaufbau bereits deutlich reduziert (s`jeweils Spalte B). Bei höheren Gehalten an Formose werden die Quellung des Tones und der daraus resultierende Visositätsaufbau fast völlig unterbunden (s` jeweils Spalten C-F). In den Ansätzen mit mehr als 10 g Formose sedimentierte der Bentonit nach dem Einrühren bereits nach kurzer Zeit. Er verhielt sich dann also wie ein inerter Feststoff.

In Gegenwart von 1 Gew.-% Formose wurde der Umbruch merklich unterdrückt und trat ab 3 Gew.-% Gehalt an Formose kaum noch auf, wie der Vergleich der Spalten B-F von Tabelle 1 und Tabelle 2 zeigt.

Beispiel 3 (Zum Vergleich)

Es wurden weitere Spülungen analog Beispiel 2 hergestellt und untersucht, wobei statt der Formose unterschiedliche Mengen von 1,2-Propandiol (Stand der Technik) zugegeben wurden. Die Resultate sind in Tabelle 3 zusammengestellt. Erst bei Zugabe von 40 Gew.-% 1,2-Propandiol (Spalte J) zur Spülung nahmen Viskosität und Gelstärken deutlich ab. Erst bei dieser vergleichsweise hohen Konzentration wurde die Dispergierung des Tones unterdrückt.

## Tabelle 1:

### Rheologische Daten von Bentonit-Schlämmen in Süßwasser nach Altern über Nacht (bei 25°C).

| Spülungsansatz | A*) | B | C | D | E | F |
|---|---|---|---|---|---|---|
| - Wasser (g) | 400 | 396 | 392 | 388 | 380 | 360 |
| - Formose (g) | 0 | 4 | | 12 | 20 | 40 |
| app. visc. (mPa.s) | 29,0 | 12,5 | 6,0 | 4,5 | 4,0 | 4,0 |
| plast. visc. (mPa.s) | 19,0 | 8,0 | 4,0 | 3,0 | 3,0 | 4,0 |
| yield value (lbs/100 sqft) | 21,0 | 9,0 | 4,0 | 3,0 | 2,0 | 0,0 |
| 10"gel (lbs/100 sqft) | 6,0 | 7,0 | 2,0 | 2,0 | 2,0 | 2,0 |
| 10"gel (lbs/100 sqft) | 30,0 | 24,0 | 10,0 | 4,0 | 3,0 | 2,0 |

*) zum Vergleich

Tabelle 2:

Rheologische Daten von Bentonit-Schlämmen nach Zugabe von Salzwasser (bei 25° C).

| Spülungsansatz | A*) | B | C | D | E | F |
|---|---|---|---|---|---|---|
| - Süßwasser (g) | 400 | 396 | 392 | 388 | 380 | 360 |
| - Salzwasser (g) | 10 | 10 | 10 | 10 | 10 | 10 |
| - Formose (g) | 0 | 4 | 8 | 12 | 20 | 40 |
| app. visc. (mPa.s) | 37,0 | 15,5 | 10,5 | 7,0 | 4,5 | 4,0 |
| plast. visc. (mPa.s) | 10,0 | 6,0 | 6,0 | 4,0 | 3,0 | 4,0 |
| yield value (lbs/100 sqft) | 54,0 | 19 | 9,0 | 6,0 | 3,0 | 0,0 |
| 10"gel (lbs/100 sqft) | 60,0 | 20 | 11 | 5,0 | 2,0 | 2,0 |
| 10"gel (lbs/100 sqft) | 63,0 | 30 | 15 | 7,0 | 2,0 | 2,0 |

*) zum Vergleich

Tabelle 3:

Rheologische Daten 1,2-Propandiol-haltiger Bentonit-Schlämme in Süßwasser nach Altern über Nacht (25° C).

| Spülungsansatz | G | H | I | J | K |
|---|---|---|---|---|---|
| - Wasser (g) | 400 | 360 | 280 | 240 | 200 |
| - 1,2-Propandiol (g) | 0 | 40 | 120 | 160 | 200 |
| app. visc. (mPa.s) | 29,0 | 28,5 | 28,0 | 22,5 | 14,5 |
| plast. visc (mPa.s) | 19,0 | 18,0 | 21,0 | 20,0 | 15,0 |
| yield value (lbs/100 sqft) | 21,0 | 21,0 | 14,0 | 5,0 | -1,0 |
| 10"gel (lbs/100 sqft) | 7,0 | 5,0 | 3,0 | 3,0 | 2,0 |
| 10"gel (lbs/100 sqft) | 29,0 | 29,0 | 25,0 | 20,0 | 8,0 |

**Patentansprüche**

1. Tonquellungsinhibierende wäßrige Bohrloch-Behandlungsflüssigkeiten, dadurch gekennzeichnet, daß sie ein Gemisch aus Hydroxaldehyden, Hydroxyketonen, gegebenenfalls niedermolekularen, mehrwertigen Alkoholen und gegebenenfalls weiteren Bestandteilen enthalten.

2. Bohrloch-Behandlungsflüssigkeiten nach Anspruch 1, dadurch gekennzeichnet, daß sie 0,1 - 60 Gew.-% des Gemisches enthalten.

3. Bohrloch-Behandlungsflüssigkeiten nach Anspruch 1 und 2, dadurch gekennzeichnet, daß sie als weitere Zusätze 0 - 10 Gew.-% Tone, 0 - 10 Gew.-% Bohrklein oder erbohrte Tone; 0 - 30 Gew.-% Beschwerungsmittel; 0 - 30 Gew.-% Sand und/oder Proppants; 0 - 40 Gew.-% Salze, 0 - 10 Gew.-% natürliche und/oder synthetische Polymere und/oder Gleitmittel, Bakterizide, Korrosionsinhibitoren, Sulfite, und/oder sonstige übliche Zusätze enthalten.

4. Bohrloch-Behandlungsflüssigkeiten nach Anspruch 1 bis 3, dadurch gekennzeichnet, daß sie als Zusätze Tenside, Aluminiumoxid-Hydroxide, Glykole und/oder Polyether enthalten.

5. Bohrloch-Behandlungsflüssigkeiten nach Anspruch 1 bis 4, dadurch gekennzeichnet, daß das Gemisch 40 bis 99 Gew.-% Hydroxyaldehyde, 1 bis 60 Gew.-% Hydroxyketone und 0 bis 40 Gew.-% niedermolekulare, mehrwertige Alkohole enthält.

6. Verfahren zur Herstellung von tonquellungsinhibierenden wäßrigen Bohrloch-Behandlungsflüssigkeiten, dadurch gekennzeichnet, daß man eine übliche wäßrige Bohrloch-Behandlungsflüssigkeit mit 0,1 -60 Gew.-% eines Gemisches versetzt, das Hydroxyaldehyde, Hydroxyketone und gegebenenfalls niedermolekulare, mehrwertige Alkohole enthält.

7. Verfahren zur Minderung der Quellneigung von Tonen in Bohrlöchern, dadurch gekennzeichnet, daß man eine wäßrige Bohrloch-Behandlungsflüssigkeit verwendet, die ein Gemisch enthält, das Hydroxyaldehyde, Hydroxyketone und gegebenenfalls niedermolekulare, mehrwertige Alkohole enthält.